# EUROPEAN PATENT APPLICATION

(11) **EP 4 797 752 A1**
(43) Date of publication of application: **26.08.2026**
(21) Application number: 24890834.5
(22) Date of filing: 15.11.2024
(51) Int. Cl.: H04W 12/03

(54) **COMMUNICATION METHOD AND COMMUNICATION APPARATUS**

(30) Priority: 17.11.2023 CN 202311546179
(71) Applicant: HUAWEI TECHNOLOGIES CO., LTD., Shenzhen 518129 (CN)
(72) Inventor: XIAO, Xun, Shenzhen, Guangdong 518129 (CN); WANG, Donghui, Shenzhen, Guangdong 518129 (CN); SONG, Yurong, Shenzhen, Guangdong 518129 (CN); LIU, Fei, Shenzhen, Guangdong 518129 (CN)
(74) Representative: Goddar, Heinz J.
(86) International application number: PCT/CN2024/132434
(87) International publication number: WO 2025/103482

(57) **Abstract**

This application provides a communication method and a communication apparatus applicable to a communication system. It enables a communication network to provide open data storage services to users and third-party devices, so that a terminal or a third-party device can store or publish its device identity information in the communication network. The method includes: obtaining, by a first device, a first request message for storing device identity information; and sending, by the first device, the first request message to a first shared device, which is a network element in the communication network.

## Description

This application claims priority to Chinese Patent Application No. 202311546179.6, filed with the China National Intellectual Property Administration on November 17, 2023 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Currently, a large number of device identities or attributes need to be maintained in information and communication technologies. In some implementations, users may publish their public device identity information on a decentralized storage system, thereby achieving autonomous management of user information.

However, in the communication network, core network elements are used to provide storage services for conventional identity authentication information, subscription data, and runtime status data (for example, mobility states), as well as operational data of network elements within an operator network. Each operator centrally manages its internal data and does not open its data storage services to users or third parties.

### SUMMARY

Embodiments of this application provide a communication method and a communication apparatus, enabling a communication network to provide open data storage services to users and third-party devices, so that a terminal or a third-party device can store or publish its device identity information in the communication network.

To achieve the foregoing objective, the following technical solutions are used in this application.

According to a first aspect, a communication method is provided. The communication method includes: A first device obtains a first request message. The first request message is used to store device identity information. The first device sends the first request message to a first shared device. The first shared device is a network element in a communication network.

Based on the method provided in the first aspect, the first shared device may obtain the device identity information of the first device, to store the device identity information in the first shared device, so that another device may obtain the device identity information by using a network element in a communication network, and perform authentication, scheduling, deployment, service provision, and the like based on the device identity information.

In a possible implementation solution, the device identity information includes a device type of the first device and/or a device type of a second device.

In this implementation, the device identity information further includes a device type, so that a device that obtains the device identity information can implement different functions such as authentication, scheduling, deployment, and service provision for different device types.

In a possible implementation solution, the device type may include a 3rd generation partnership project 3GPP terminal, a network element of the operator, or a non-3GPP terminal.

In a possible implementation solution, the first device is a 3GPP terminal, and the first request message may further indicate authentication information of the first device. The authentication information of the first device may be used to perform network access verification on the terminal, to prevent an unverified terminal from accessing a network, thereby making communication more secure.

In a possible implementation solution, the authentication information of the first device may include an access credential of the first device.

In a possible implementation solution, that the first device sends the first request message to the first shared device may include: The first device sends the first request message to the first shared device via an authentication network element.

In a possible implementation solution, the first device is a non-3GPP terminal, the first request message further indicates information about an interface of a verification service, and the verification service is used to verify a non-3GPP terminal.

In a possible implementation solution, if the device identity information includes the device type of the first device, the device identity information further includes one or more of the following: a first identifier of the first device, a controller of a subject corresponding to the first device, information for verifying ownership of the first identifier, a subject type corresponding to the first device, a network domain identifier corresponding to the first identifier, a verifiable credential corresponding to the first identifier, a service or a service interface supported by the first device, and an encryption method corresponding to the first device. In other words, the first device may upload the device identity information of the first device. In this way, complexity of an interaction procedure can be reduced.

In a possible implementation solution, if the device identity information includes the device type of the second device, the device identity information may further include one or more of the following: a second identifier of the second device, a device corresponding to the second identifier, information for verifying ownership of the second identifier, a subject type corresponding to the second device, a network domain identifier corresponding to the second identifier, a verifiable credential corresponding to the second identifier, a service or an interaction interface supported by the second device, and an encryption method corresponding to the second device. In other words, the first device may send device identity information of another device, and there are more application scenarios.

In a possible implementation solution, the first request message is further used to publish the device identity information. In this way, another device may obtain device identity information of devices stored in the first shared device.

In a possible implementation solution, the method provided in the first aspect may further include: The first device receives a first response message from the first shared device. The first response message indicates whether the first shared device has successfully stored the device identity information. In this way, a storage result of the device identity information can be fed back to the first device in time, thereby improving user experience.

In a possible implementation solution, the method provided in the first aspect may further include: The first device sends a second request message to the second shared device. The second request message is used to request device identity information corresponding to a third device. The first device receives the second response message from the second shared device. The second response message indicates the device identity information corresponding to the third device. In this way, the first device may query device identity information of another device from the communication network as needed.

According to a second aspect, a communication method is provided. The communication method includes: A first shared device receives a first request message from a first device. The first request message is used to store device identity information. The first shared device stores the device identity information in the first request message.

Based on the method provided in the first aspect, the first shared device may obtain the device identity information of the first device, to store the device identity information in the first shared device, so that another device may obtain the device identity information by using a network element in a communication network, and perform authentication, scheduling, deployment, service provision, and the like based on the device identity information.

In a possible implementation solution, the device identity information includes a device type of the first device and/or a device type of a second device.

In a possible implementation solution, the device type may include a 3rd generation partnership project 3GPP terminal, a network element of the operator, or a non-3GPP terminal.

In a possible implementation solution, the first device is a 3GPP terminal, and the first request message further indicates authentication information of the first device.

In a possible implementation solution, the authentication information of the first device includes an access credential of the first device.

In a possible implementation solution, that the first shared device receives the first request message from the first device may include: The first shared device receives the first request message from the first device via an authentication network element.

In a possible implementation solution, the first device is a 3GPP terminal, and the method provided in the second aspect may further include: The first shared device authenticates the first device via the authentication network element. That the first shared device stores the device identity information in the first request message may include: When the first device is successfully authenticated, the first shared device stores the device identity information in the first request message.

In a possible implementation solution, the first device is a non-3GPP terminal, and the first request message further indicates information about an interface of a verification service. The verification service is used to verify a non-3GPP terminal.

In a possible implementation solution, if the device identity information includes the device type of the first device, the device identity information includes one or more of the following: a first identifier of the first device, a controller of a subject corresponding to the first device, information for verifying ownership of the first identifier, a subject corresponding to the first device, a network domain identifier corresponding to the first identifier, a verifiable credential corresponding to the first identifier, a service or a service interface supported by the first device, and an encryption method corresponding to the first device.

In a possible implementation solution, if the device identity information includes the device type of the second device, the device identity information includes one or more of the following: a second identifier of the second device, a device corresponding to the second identifier, information for verifying ownership of the second identifier, a subject corresponding to the second device, a network domain identifier corresponding to the second identifier, a verifiable credential corresponding to the second identifier, a service or an interaction interface supported by the second device, and an encryption method corresponding to the second device.

In a possible implementation solution, the first request message is further used to publish the device identity information, and the method provided in the second aspect may further include: The first shared device publishes the device identity information.

In a possible implementation solution, the method provided in the second aspect may further include: The first shared device sends a first response message to the first device.

In a possible implementation solution, the method provided in the second aspect may further include: The first shared device sends the device identity information to a second shared device.

In a possible implementation solution, the method provided in the second aspect may further include: The first shared device receives a third request message from a fourth device. The third request message is used to request device identity information corresponding to a fifth device. The first shared device sends a third response message to the fourth device. The third response message indicates the device identity information corresponding to the fifth device.

In a possible implementation solution, the method provided in the second aspect may further include: The first shared device authenticates the fourth device via an authentication service device.

For technical effects of the method provided in the second aspect, refer to related descriptions of the method provided in the first aspect. Details are not described herein again.

According to a third aspect, a communication method is provided. The communication method includes: A fourth device sends a third request message to a second shared device. The third request message is used to request device identity information corresponding to an identifier of a fifth device. The fourth device receives a third response message from the second shared device. The third response message includes the device identity information corresponding to the identifier of the fifth device.

Based on the communication method provided in the third aspect, the fourth device may request, from the second shared device, attribute information corresponding to the identifier of the fifth device, to obtain the device identity information.

In a possible implementation solution, the third request message may further include information indicating an access credential of the fourth device. The access credential of the fourth device is used to verify an identity of the fourth device.

In a possible implementation solution, the third request message may further include information indicating a device type of the fourth device.

According to a fourth aspect, a communication method is provided. The communication method includes: A second shared device receives a third request message from a fourth device. The third request message is used to request device identity information corresponding to an identifier of a fifth device. The second shared device sends a third response message to the fourth device. The third response message includes the device identity information corresponding to the identifier of the fifth device.

In a possible implementation solution, the method provided in the fourth aspect may further include: The second shared device resolves the identifier of the fifth device to obtain device identity information corresponding to the identifier of the fifth device.

In a possible implementation solution, the third request message indicates information about an access credential of the fourth device. The access credential of the fourth device is used to verify the fourth device. The method provided in the fourth aspect may further include: The second shared device performs identity verification with the second shared device based on the access credential of the fourth device.

In a possible implementation solution, the third request message may further include information indicating a device type of the fourth device.

In addition, for technical effects of the communication method according to the fourth aspect, refer to the technical effects of the communication method according to the third aspect. Details are not described herein again.

According to a fifth aspect, a communication apparatus is provided. The communication apparatus is configured to perform the communication method according to any one of the implementations of the first aspect to the fourth aspect.

In this application, the communication apparatus according to the fifth aspect may be the first device according to the first aspect, the first shared device according to the second aspect, the fourth device according to the third aspect, the second shared device according to the fourth aspect, a chip (system) or another component that may be disposed in the first device, the first shared device, the fourth device, or the second shared device, or an apparatus including the first device, the first shared device, the fourth device, or the second shared device.

It should be understood that the communication apparatus according to the fifth aspect includes a corresponding module, unit, or means (means) for implementing the communication method according to any one of the first aspect to the fourth aspect. The module, the unit, or the means may be implemented by hardware, may be implemented by software, or may be implemented by hardware by executing corresponding software. The hardware or the software includes one or more modules or units configured to perform the functions in the foregoing communication method.

According to a sixth aspect, a communication apparatus is provided. The communication apparatus includes a processor, and the processor is configured to perform the communication method according to any one of the possible implementations of the first aspect to the fourth aspect.

In a possible implementation solution, the communication apparatus according to the sixth aspect may further include a transceiver. The transceiver may be a transceiver circuit or an interface circuit. The transceiver may be used by the communication apparatus according to the sixth aspect to communicate with another communication apparatus.

In a possible implementation solution, the communication apparatus according to the sixth aspect may further include a memory. The memory and the processor may be integrated together, or may be disposed separately. The memory may be configured to store a computer program and/or data related to the communication method according to any one of the first aspect to the fourth aspect. When the processor executes the computer program, the communication apparatus is enabled to perform the communication method according to any one of the implementations of the first aspect to the fourth aspect.

In a possible implementation solution, the processor is configured to: after being coupled to the memory and reading the computer program in the memory, perform, based on the computer program, the communication method according to any one of the implementations of the first aspect to the fourth aspect.

In this application, the communication apparatus according to the sixth aspect may be the first device according to the first aspect, the first shared device according to the second aspect, the fourth device according to the third aspect, the second shared device according to the fourth aspect, a chip (system) or another component that may be disposed in the first device, the first shared device, the fourth device, or the second shared device, or an apparatus including the first device, the first shared device, the fourth device, or the second shared device.

According to a seventh aspect, a processor is provided. The processor is configured to perform the communication method according to any one of the possible implementations of the first aspect to the fourth aspect.

According to an eighth aspect, a communication system is provided. The communication system includes one or more terminal devices and one or more network devices.

According to a ninth aspect, a computer-readable storage medium is provided, and includes a computer program or instructions. When the computer program or the instructions are run on a computer, the computer is enabled to perform the communication method according to any one of the possible implementations of the first aspect to the fourth aspect.

According to a tenth aspect, a computer program product is provided, and includes a computer program or instructions. When the computer program or the instructions are run on a computer, the computer is enabled to perform the communication method according to any one of the possible implementations of the first aspect to the fourth aspect.

In addition, for technical effects of the communication apparatuses according to the fifth aspect to the tenth aspect, refer to the technical effects of the communication methods according to the first aspect to the fourth aspect. Details are not described herein again.

### BRIEF DESCRIPTION OF DRAWINGS

FIG. 1 is a diagram of an architecture of a communication system according to an embodiment of this application;
FIG. 2 is a schematic flowchart 1 of a communication method according to an embodiment of this application;
FIG. 3 is a schematic flowchart of device identity information synchronization according to an embodiment of this application;
FIG. 4 is a schematic flowchart 2 of a communication method according to an embodiment of this application;
FIG. 5 is a schematic flowchart 3 of a communication method according to an embodiment of this application;
FIG. 6 is a schematic flowchart 4 of a communication method according to an embodiment of this application;
FIG. 7 is a schematic flowchart 5 of a communication method according to an embodiment of this application;
FIG. 8 is a schematic flowchart 6 of a communication method according to an embodiment of this application;
FIG. 9 is a diagram 1 of a structure of a communication apparatus according to an embodiment of this application; and
FIG. 10 is a diagram 2 of a structure of a communication apparatus according to an embodiment of this application.

### DESCRIPTION OF EMBODIMENTS

The technical solutions in embodiments of this application may be applied to various communication systems, for example, a wireless fidelity (wireless fidelity, Wi-Fi) system, a vehicle-to-everything (vehicle to everything, V2X) communication system, a device-to-device (device-to-device, D2D) communication system, an internet of vehicles communication system, a 4th generation (4th generation, 4G) mobile communication system such as a long term evolution (long term evolution, LTE) system, a 5th generation (5th generation, 5G) mobile communication system such as a new radio (new radio, NR) system, and a future communication system such as a 6th generation (6th generation, 6G) mobile communication system.

All aspects, embodiments, or features are presented in this application by describing a system that may include a plurality of devices, components, modules, and the like. It should be appreciated and understood that, each system may include another device, component, module, and the like, and/or may not include all devices, components, modules, and the like discussed with reference to the accompanying drawings. In addition, a combination of these solutions may be used.

In addition, in embodiments of this application, terms such as "example" and "for example" are used to represent giving an example, an illustration, or a description. Any embodiment or implementation described as an "example" in this application should not be construed as being more preferred or having more advantages than other embodiments or implementations. To be precise, the term "example" is used to represent a concept in a specific manner.

In embodiments of this application, terms "information (information)", "signal (signal)", "message (message)", "channel (channel)", and "signaling (signaling)" may be interchangeably used sometimes. It should be noted that meanings expressed by the terms are consistent when differences of the terms are not emphasized. Terms "of (of)", "corresponding (corresponding, relevant)", and "corresponding (corresponding)" may be interchangeably used sometimes. It should be noted that meanings expressed by the terms are consistent when differences of the terms are not emphasized.

In embodiments of this application, sometimes a subscript such as W₁ may be miswritten as a non-subscript form such as W1. Expressed meanings are consistent when differences are not emphasized.

Network architectures and service scenarios described in embodiments of this application are intended to describe the technical solutions in embodiments of this application more clearly, and do not constitute a limitation on the technical solutions provided in embodiments of this application. A person of ordinary skill in the art may know that as the network architectures evolve and a new service scenario emerges, the technical solutions provided in embodiments of this application are also applicable to a similar technical problem.

Currently, a large number of device identities or attributes needs to be maintained in information and communication technologies. In some implementations, users may publish their public device identity information on a decentralized storage system, thereby achieving autonomous management of user information.

However, in the communication network, core network elements are used to provide storage services for conventional identity authentication information, subscription data, and runtime status data (for example, mobility states), as well as operational data of network elements within operator networks. Each operator centrally manages its internal data and does not open its data storage services to users or third parties. Therefore, how to provide open data storage services for users or third parties through an operator network is a technical problem to be solved urgently.

For ease of understanding, the following first describes technical terms related to embodiments of this application.

Attribute information is information that describes a feature of an identity corresponding to a device, and the feature may be an identity feature of the device or an identity feature of a subject (subject) corresponding to the device.

The subject corresponding to the device may be a physical entity, such as the device itself. Alternatively, the subject corresponding to the device may be a unit organized based on logic, such as a person, an organization, or an enterprise. The subjects listed herein are merely an example. In actual implementations, the subject may alternatively be of another form, and details are not described herein again.

Device identity information is a set of attribute information of a device. A piece of device identity information may include one or more pieces of attribute information, where the attribute information corresponds to an identity of the device. For example, a piece of attribute information may include any one of the following: the device type of a device, an identifier (identity, ID) of the device, a controller of a subject corresponding to the device, information for verifying ownership of a first identifier, the subject type corresponding to the device, a network domain identifier corresponding to the identifier of the device, a verifiable credential corresponding to the identifier of the device, a service or a service interface supported by the device, or an encryption method corresponding to the device.

Different attribute information may be identified by using an attribute index. For example, an attribute index corresponding to the identifier of the device may be an "identifier", an index corresponding to the controller of the subject corresponding to the device may be a "subject controller", an attribute index corresponding to the information for verifying ownership of the first identifier may be a "verification method", an attribute index corresponding to the subject type corresponding to the device may be a "subject type", an attribute index corresponding to the identifier of the device may be a "network domain identifier", an attribute index corresponding to the verifiable credential corresponding to the identifier of the device may be a "verifiable credential", an attribute index corresponding to the service or the service interface supported by the device may be a "service interface", and an attribute index corresponding to the encryption method corresponding to the device may be an "encryption method".

Table 1 describes attribute indexes, data types, mandatory requirements, quantities, and definitions corresponding to different attribute information.

**Table 1**

| Attribute index | Attribute index | Data type | Mandatory | Quantity | Definition |
|---|---|---|---|---|---|
| scId | Identifier | String (String) | Yes | 1 | Identifier of a subject corresponding to a device |
| sbjType | Subject type | Integer (Int) | Yes | 1 | Type of the subject corresponding to the device |
| sbjController | Subject controller | String | Yes | 1..n | Controller of the subject corresponding to the device |
| domainId | Network domain identifier | String | Yes | 1..n | Identifier of a network domain to which the subject belongs, indicating a visible range of device identity information (for example, a device allowed to obtain the device identity information). |
| verifyMethod | Verification method | Key-value pair (Map) | Yes | 1..n | A set of verification methods used to verify ownership of the identifier of the subject. For example, one or more public key certificates may be included. With the public key certificate, a verifier can initiate a challenge to the subject and use a cryptographic method to verify whether the subject truly possesses the public key. |
| assertMethod | Verifiable credential | Key-value pair | No | 0..n | A set of assertion methods, used to store one or more verifiable credentials obtained by the subject. |
| service | Supported service | Key-value pair | No | 0..n | A service and an interaction interface that the subject can provide, for example, a terminal's personal homepage, public information, an operator's online contract-signing link for service fees, and an official website of an organization or institution. |
| keyAgreeMethod | Encryption method | Key-value pair | No | 0..n | A set of key agreement methods, indicating one or more key exchange methods that can be supported when point-to-point encrypted communication is established. |

It may be understood that the attribute index is merely used as an example. In actual implementation, the attribute index may alternatively be expressed in another possible manner. For example, the attribute index "identifier" may alternatively be represented as "self-control identity" or "scId". The attribute index "subject type" may alternatively be represented as "sbjType". The attribute index "subject controller" may alternatively be represented as "sbjController". The attribute index "network domain identifier" may alternatively be represented as "domainId". The attribute index "verification method" may alternatively be represented as "verifyMethod". The attribute index "verifiable credential" may alternatively be expressed as "assertion method" or "assertMethod". The attribute index "supported service" may alternatively be represented as "service". The attribute index "encryption method" may alternatively be represented as "point-to-point communication encryption method" or "keyAgreeMethod".

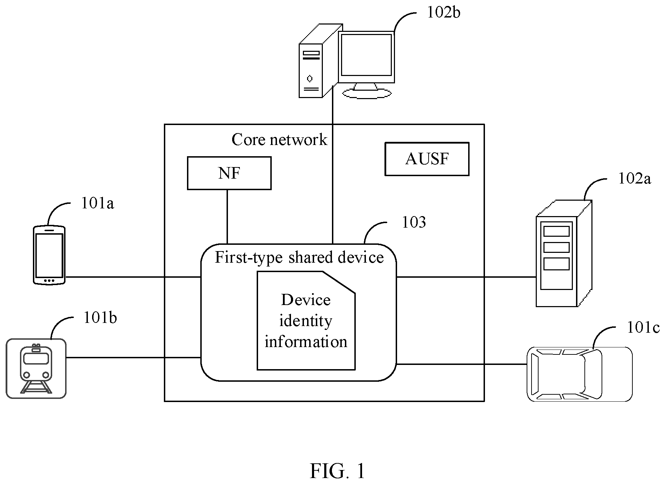

It should be understood that the mandatory requirement for each type of attribute information in FIG. 1 is merely used as an example. In actual implementation, for different nodes or identifiers of the different nodes, included attribute information may be different. For example, attribute information corresponding to a node or an identifier of the node may be determined based on a scenario in which the node is located.

In some possible implementation solutions, the verifiable credential may include a verifiable credential (verifiable credential, VC) for the subject to access an operator network. The VC may include an identity of an operator that publishes the VC and proof information, and the proof information may be used to prove legitimacy of a device corresponding to the subject and an address for obtaining subscription data (subscription). For example, if the device corresponding to the subject is a terminal, the proof information may be used to prove that "the terminal is legitimate".

In some possible implementation solutions, the device identity information may include identification information and profile (profile) information. The identification information and the profile information are separately generated and separately stored. The identification information may include an identifier of a device, and the profile information may include attribute information other than the identifier in the device identity information. In this way, different information can be independently stored or read, and leakage of the attribute information can be reduced. In addition, data processing, such as publication, can be more flexible.

In some possible implementation solutions, the device identity information may include the identification information and the profile information. The identification information and the profile information are separately generated and separately stored. The identification information may include an identifier of a device and information that can be used to verify an identity of the device, for example, a verifiable credential. The profile information may include information in the device identity information, other than the identifier of the device and the information that can be used to verify the identity of the device. In this way, the profile information can be generated as required, thereby reducing an amount of stored data.

It should be understood that the attribute index may also be referred to as an attribute name, or another possible name.

In some possible implementation solutions, the attribute information may alternatively be implemented by using a fixed field. In this case, attribute information corresponding to each attribute index corresponds to one field. In other words, the attribute information corresponding to each attribute index is carried in one field.

The attribute information corresponding to the attribute index refers to attribute information that can be identified by using the attribute index. The attribute index corresponding to the attribute information indicates that the attribute information may be identified by using the attribute index. The following describes technical solutions of this application with reference to accompanying drawings.

For ease of understanding of embodiments of this application, a communication system shown in FIG. 1 is first used as an example to describe in detail a communication system applicable to embodiments of this application. For example, FIG. 1 is a diagram of an architecture of a communication system to which a communication method according to an embodiment of this application is applicable.

As shown in FIG. 1, the communication system includes a first-type device (for example, a first-type device 101a to a first-type device 101c), a second-type device (for example, a second-type device 102a and a second-type device 102b), and a first-type shared device 103.

Both the first-type device (for example, the first-type device 101a to the first-type device 101c) and the second-type device (for example, the second-type device 102a and the second-type device 102b) may exchange information with the first-type shared device 103.

The first-type device (for example, the first-type device 101a to the first-type device 101c) may be a 3rd generation partnership project (3rd generation partnership project, 3GPP) terminal. The second-type device (for example, the second-type device 102a and the second-type device 102b) may be a non-3GPP terminal.

The 3GPP terminal is a terminal that uses 3GPP access as an access type when accessing a network, while the non-3GPP terminal is a terminal that uses non-3GPP access as an access type when accessing the network. In other words, for a same terminal, when different access types are used, the terminal is of different types.

The first-type shared device is a network element in a communication network, for example, a network element in a core network. For example, the first-type shared device may be a decentralized shared profile repository (decentralized shared profile repository, dSPR). The communication system may include one or more first-type shared devices.

In addition, the communication system shown in FIG. 1 may further include an authentication network element, and the authentication network element may be configured to authenticate a 3GPP terminal. For example, the authentication network element may be an authentication server function (authentication server function, AUSF) network element.

The communication system shown in FIG. 1 may further include another network element, for example, a network function (network function, NF). For example, the NF may be unified data management (unified data management, UDM), an authentication server function (authentication server function, AUSF), a policy control function (policy control function, PCF), or a unified data repository (unified data repository, UDR) function. In addition, the communication system shown in FIG. 1 may further include an access network device.

The communication system shown in FIG. 1 may further include one or more authentication service devices (not shown in FIG. 1). The authentication service device may be a network element or a device that can provide a verification service.

In some possible implementation solutions, the authentication service device may be configured to verify a device in a network. For example, the authentication service device may be configured to verify an identity of a device, for example, verify whether the device is a device authenticated by a core network, or verify whether the device is a legitimate or valid device.

In some possible implementation solutions, the authentication service device may be configured to verify a non-3GPP terminal. For example, the authentication service device may be a verification server of a device provider that initiates a verification procedure. For example, a device initiating a verification procedure is a terminal, the device provider is a terminal vendor, and the authentication service device may be a verification server of the terminal vendor. For example, a device initiating the verification procedure is a card having a communication function, the device provider is a card vendor, and the authentication service device may be a verification server of the card vendor. The device provider may also be referred to as a device manufacturer or another name. This is not limited in this embodiment of this application.

The communication system shown in FIG. 1 may further include a second-type shared device. The second-type shared device is a device having a storage function. For example, the second-type shared device may be a device in a non-3GPP network.

The terminal is a terminal that accesses the communication system and has a receiving and sending function, a chip or a chip system that can be disposed in the terminal, or a unit or a module that has a terminal function. The terminal may also be referred to as a terminal device, or may be referred to as user equipment (user equipment, UE), a mobile station (mobile station, MS), a mobile terminal (mobile terminal, MT), or the like, or is a device that is configured to provide voice or data connectivity for a user, or may be an internet of things device. For example, the terminal includes a handheld device, an in-vehicle device, or the like that has a wireless connection function. Currently, the terminal may be a mobile phone, a tablet computer, a notebook computer, a palmtop computer, a mobile internet device (mobile internet device, MID), a wearable device (for example, a smart watch, a smart band, a pedometer, or smart glasses), an in-vehicle device (for example, an automobile, a bicycle, an electric vehicle, an airplane, a ship, a train, or a highspeed train), a satellite terminal, a virtual reality (virtual reality, VR) device, an augmented reality (augmented reality, AR) device, a smart point of sale (point of sale, POS) machine, customer-premises equipment (customer-premises equipment, CPE), a wireless terminal in industrial control, a smart home device (for example, a refrigerator, a television, an air conditioner, or an electricity meter), a smart robot, a robot arm, a workshop device, a wireless terminal in self driving, a wireless terminal in telemedicine, a wireless terminal in a smart grid (smart grid), a wireless terminal in transportation safety, a wireless terminal in a smart city, a wireless terminal in a smart home, a flight device (for example, a smart robot, a hot air balloon, an uncrewed aerial vehicle, or an airplane), or the like. Alternatively, the terminal may be a vehicle apparatus, for example, a vehicle apparatus, an in-vehicle module, an in-vehicle chip, an on-board unit (on board unit, OBU), or a telematics box (telematics box, T-BOX). Alternatively, the terminal may be another device that has a terminal function. For example, the terminal may be a device that functions as a terminal in D2D communication.

The terminal in this application may alternatively be a module or a unit that can be configured to implement a function of the terminal. For example, the terminal may alternatively be a universal integrated circuit card (universal integrated circuit card, UICC) or a blockchain universal integrated circuit card (blockchain UICC, B-UICC).

A device form of the terminal is not limited in embodiments of this application. An apparatus configured to implement a function of the terminal may be a terminal, or may be an apparatus, for example, a chip system, that can support the terminal in implementing the function. The apparatus may be mounted in the terminal or used in combination with the terminal. In this embodiment of this application, the chip system may include a chip, or may include a chip and another discrete component.

In a possible scenario, the access network device may be a base station (base station), an evolved NodeB (evolved NodeB, eNodeB), a transmission reception point (transmitting and receiving point, TRP), a transmission point (transmitting point, TP), a next-generation NodeB (next-generation NodeB, gNB), a next-generation base station in a 6th generation (6th generation, 6G) mobile communication system, a base station in a future mobile communication system, a satellite, an access point (access point, AP) in a Wi-Fi system, an integrated access and backhaul (integrated access and backhaul, IAB) node, or an access network device that is in a non-terrestrial communication network (non-terrestrial network, NTN) communication system of a mobile switching center, that is, may be deployed on a high-altitude platform station, a satellite, or the like. The access network device may be a macro base station, a micro base station or an indoor base station, a relay node or a donor node, or a radio controller in a cloud radio access network (cloud radio access network, CRAN) scenario. Alternatively, the access network device may be a device that functions as a base station in device-to-device (device-to-device, D2D) communication, internet of vehicles communication, uncrewed aerial vehicle communication, or machine-to-machine communication. Optionally, the access network device may alternatively be a server, a wearable device, a vehicle, an in-vehicle device, or the like. For example, an access network device in a vehicle-to-everything (vehicle to everything, V2X) technology may be a road side unit (road side unit, RSU).

In another possible scenario, a plurality of access network devices cooperate to assist the terminal in implementing radio access, and different access network devices respectively implement some functions of the base station. For example, the access network device may be a central unit (central unit, CU), a distributed unit (distributed unit, DU), a CU-control plane (control plane, CP), a CU-user plane (user plane, UP), a radio unit (radio unit, RU), or the like. The CU and the DU may be separately disposed, or may be included in a same network element, for example, a baseband unit (baseband unit, BBU). The RU may be included in a radio frequency device or a radio frequency unit, for example, included in a remote radio unit (remote radio unit, RRU), an active antenna unit (active antenna unit, AAU), or a remote radio head (remote radio head, RRH). It may be understood that the access network device may be a CU node, a DU node, or a device including a CU node and a DU node. In addition, the CU may be classified into an access network device in a radio access network (radio access network, RAN), or the CU may be classified into an access network device in a core network (core network, CN). This is not limited herein.

In different systems, the CU (or the CU-CP and the CU-UP), the DU, or the RU may also have different names, but a person skilled in the art may understand meanings thereof. For example, in an open RAN (open RAN, ORAN) system, the CU may also be referred to as an O-CU (open CU), the DU may also be referred to as an O-DU, the CU-CP may also be referred to as an O-CU-CP, the CU-UP may also be referred to as an O-CU-UP, and the RU may also be referred to as an O-RU. For ease of description, the CU, the CU-CP, the CU-UP, the DU, and the RU are used as examples for description in this application. Any one of the CU (or the CU-CP or the CU-UP), the DU, and the RU in this application may be implemented by using a software module, a hardware module, or a combination of a software module and a hardware module.

It should be noted that the communication method provided in embodiments of this application is applicable to communication between any two devices shown in FIG. 1, for example, between terminal devices, between network devices, and between the terminal device and the network device. For a specific implementation, refer to the following method embodiments. Details are not described herein.

It should be noted that the solutions in embodiments of this application may also be applied to another communication system, and a corresponding name may also be replaced with a name of a corresponding function in the another communication system.

It should be understood that FIG. 1 is merely a simplified diagram used as an example for ease of understanding. The communication system may further include another network device and/or another terminal device that are/is not drawn in FIG. 1.

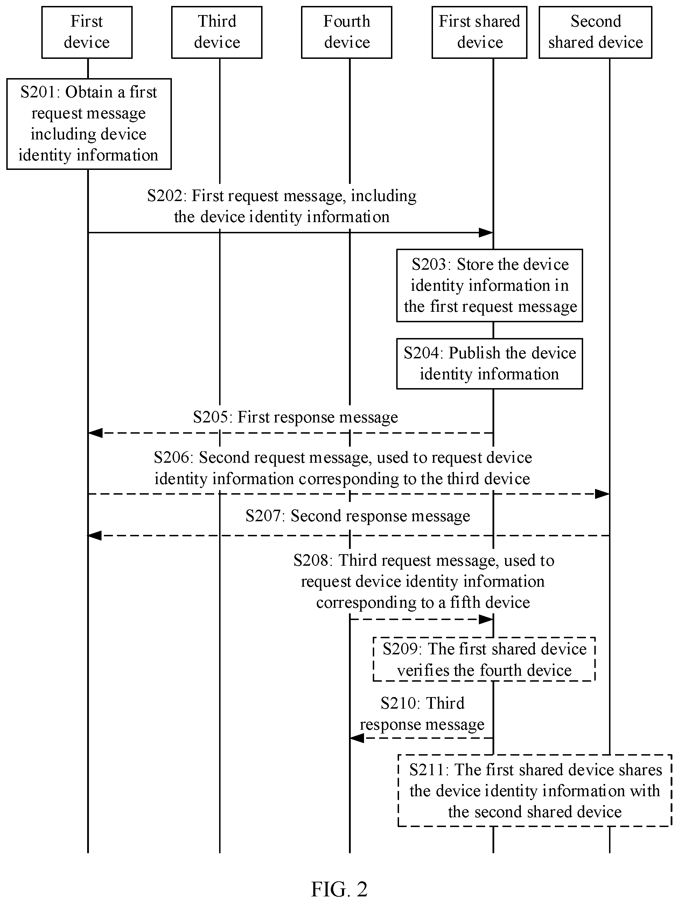

The following describes in detail communication methods provided in embodiments of this application with reference to FIG. 2 to FIG. 8.

For example, FIG. 2 is a schematic flowchart 1 of a communication method according to an embodiment of this application. The communication method may be applied to communication between nodes shown in FIG. 1.

As shown in FIG. 2, the communication method includes the following steps.

S201: A first device obtains a first request message.

The first device may be a device in a 3GPP network, a device in a non-3GPP network, or a device corresponding to an operator. That is, the first device may be a first-type device or a second-type device in the communication system shown in FIG. 1. Alternatively, the first device may be a device having an access type of 3GPP access, in which case it communicates through the 3GPP network, or having an access type of non-3GPP access, in which case it communicates through the non-3GPP network. Alternatively, the first device may be an access network device, a core network device, or a server of the operator. In a possible implementation solution, the device type may include a 3rd generation partnership project 3GPP terminal, a network element of the operator, or a non-3GPP terminal. In other words, in terms of the terminal, the device type is an access type of the terminal.

The first request message is used to store device identity information, that is, requests storage of the device identity information. The first request message may carry the device identity information. For implementation of the device identity information, refer to related descriptions of the foregoing technical terms. Details are not described herein again.

In a possible implementation, the device identity information may include device identity information corresponding to the first device and/or device identity information corresponding to a second device. The device identity information corresponding to the first device includes a device type of the first device, and the device identity information corresponding to the second device includes a device type of the second device. By further including the device type, the device identity information enables a device that obtains the device identity information to perform different functions such as authentication, scheduling, deployment, and service provision for different device types.

In a possible implementation, the device identity information of the first device may further include one or more of the following: a first identifier of the first device, a controller of a subject corresponding to the first device, information for verifying ownership of the first identifier, a subject type corresponding to the first device, a network domain identifier corresponding to the first identifier, a verifiable credential corresponding to the first identifier, a service or a service interface supported by the first device, and an encryption method corresponding to the first device.

For implementation of the attribute information corresponding to the first device, refer to related descriptions in the technical terms. Details are not described herein again.

In a possible implementation solution, the device identity information of the second device may further include one or more of the following: a second identifier of the second device, a device corresponding to the second identifier, information for verifying ownership of the second identifier, a subject type corresponding to the second device, a network domain identifier corresponding to the second identifier, a verifiable credential corresponding to the second identifier, a service or an interaction interface supported by the second device, and an encryption method corresponding to the second device.

For implementation of the attribute information corresponding to the first device, refer to related descriptions in the technical terms. Details are not described herein again.

It may be understood that, in some possible implementation solutions, the first request message may further carry a subtype of the first device or the second device. For example, the subtype indicates that the first device or the second device is a mobile phone, a vehicle, an internet of things (internet of things, IoT) device, or the like.

S202: The first device sends the first request message to a first shared device. Correspondingly, the first shared device receives the first request message from the first device.

The first shared device is a network element in a communication network. The communication network may be a 3GPP network. For example, the first shared device may be a first-type shared device in the communication system provided in FIG. 1.

S203: The first shared device stores the device identity information in the first request message.

In a possible implementation solution, the first request message is further used to publish the device identity information. In this case, the method provided in FIG. 2 may further include S204.

S204: The first shared device publishes the device identity information.

The first shared device may send first information, and the first information indicates that the first shared device stores the device identity information.

It may be understood that the first shared device may publish the device identity information in a broadcast (broadcast), multicast (multicast), or unicast (unicast) manner.

It may be understood that an execution sequence in this embodiment of this application is merely used as an example. In actual implementation, different steps may be performed in another sequence provided that the sequence complies with logic. For example, S204 may be performed after S203, or S204 and S203 may be performed together.

Based on the method provided in FIG. 2, the first shared device may obtain the device identity information of the first device, to store the device identity information in the first shared device, so that another device may obtain the device identity information by using a network element in a communication network, and perform authentication, scheduling, deployment, service provision, and the like based on the device identity information.

In a possible implementation solution, the method provided in the first aspect may further include S205.

S205: The first shared device sends a first response message to the first device. Correspondingly, the first device receives the first response message from the first shared device.

The first response message indicates whether the first shared device has successfully stored the device identity information. For example, the first response message may indicate that the first shared device successfully stores the device identity information. For another example, the first response message may indicate that the first shared device fails to store the device identity information.

It may be understood that when the solution provided in FIG. 2 includes S204, the first response message may further indicate whether the device identity information is successfully published.

In addition, the method provided in FIG. 2 may further include one or more of the following design 1 to design 3. The following separately describes the design 1 to design 3.

In the design 1, the first device may further obtain device identity information of another device from a second shared device. In this case, the method provided in FIG. 2 may further include S206 and S207.

S206: The first device sends a second request message to the second shared device. Correspondingly, the second shared device receives the second request message from the first device.

The second request message is used to request device identity information corresponding to a third device.

The second request message may carry an identifier of the third device. The identifier may correspond to one piece of device identity information of the third device.

For an implementation principle of the second shared device, refer to an implementation principle of the first shared device. It should be understood that the second shared device may be the same as the first shared device, that is, the second shared device may be a first-type shared device. For example, the second shared device may be the first shared device. Alternatively, the second shared device may be different from the first shared device. For example, the second shared device may be a second-type shared device.

S207: The second shared device sends a second response message to the first device. Correspondingly, the first device receives the second response message from the second shared device.

The second response message indicates the device identity information corresponding to the third device.

It may be understood that S207 may be performed when the first device is successfully verified. In this case, the method provided in FIG. 2 may further include: The second shared device verifies the first device. For a principle of verifying the first device by the second shared device, refer to the following related descriptions of S209. Details are not described herein again.

In design 2, the first shared device may provide the device identity information for a fourth device. In this case, the method provided in FIG. 2 may further include S208 to S210.

S208: The fourth device sends a third request message to the first shared device. Correspondingly, the first shared device receives the third request message from the fourth device.

The fourth device may be a first-type device, or may be a second-type device. The third request message is used to request device identity information corresponding to a fifth device.

In a possible implementation, the third request message may carry information indicating the fifth device, for example, an identifier of the fifth device. The third request message further includes identity information of the fourth device, for example, a subscription concealed identifier (subscription concealed identifier, SUCI), a user name and password pair, or a temporary verification code.

S209: The first shared device authenticates or verifies (verification) the fourth device.

The following provides descriptions with reference to different cases.

In case 1, if the fourth device is a first-type device, the first shared device accesses an authentication network element corresponding to the fourth device, and sends an authentication request to the authentication network element. The authentication request includes the identity information of the fourth device that is carried by the fourth device in the third request message, for example, an identifier of the fourth device, for example, an SUCI. The authentication network element checks the provided identity information of the fourth device, determines whether the authentication succeeds, and returns an authentication result to the first shared device.

In case 2, if the fourth device is a second-type device, the first shared device accesses an authentication service device for the fourth device (for example, the fourth device may access an authentication server through an interface of a verification service), and sends a verification request to the authentication service device. The verification request includes the identity information (for example, a username and password pair, or a temporary verification code) provided by the fourth device in the third request message. The authentication service device checks the provided identity information of the fourth device, determines whether the verification succeeds, and returns a verification result to the first shared device. The authentication service device may be a verification server of a provider of the fourth device. There is a correspondence between the authentication service device and a device provider verification service address, and the authentication service device may be determined based on the device provider verification service address.

In some possible implementation solutions, the authentication service device may be a device corresponding to a blockchain node in a blockchain system.

In case 2, the first request message further indicates information about the interface of the verification service, and the verification service is used to verify a non-3GPP terminal.

S210: The first shared device sends a third response message to the fourth device. Correspondingly, the fourth device receives the third response message from the first shared device.

The third response message indicates the device identity information corresponding to the fifth device.

It may be understood that, in the design 2, S209 is an optional step. When S209 exists in the design 2, S210 may be performed when the fourth device is successfully verified.

In a design 3, the first shared device may store the device identity information in the second shared device. In this case, a type of the second shared device may be the same as that of the first shared device, namely, a device in a 3GPP network. Alternatively, a type of the second shared device may be different from that of the first shared device, for example, a device in a non-3GPP network. The method provided in FIG. 2 may further include S211.

S211: The first shared device shares the device identity information with the second shared device.

In this case, the second shared device is different from the first shared device.

The second shared device may be a first-type shared device or a second-type shared device.

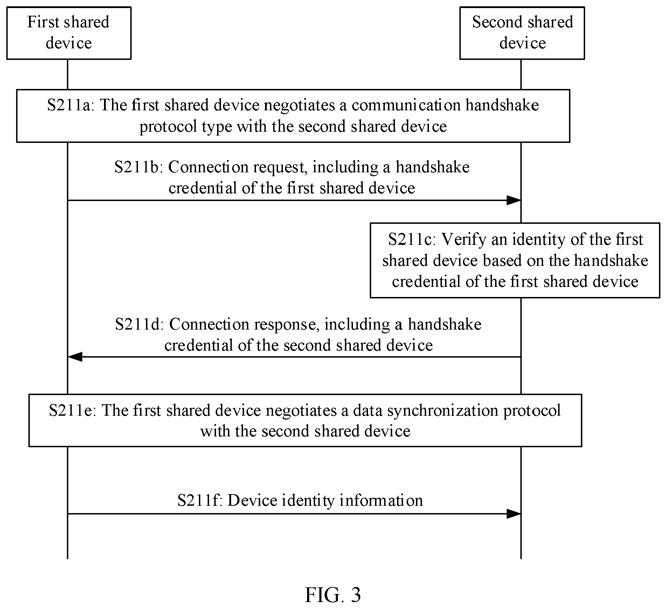

For an implementation principle of S211, refer to the following schematic flowchart of sharing the device identity information shown in FIG. 3.

As shown in FIG. 3, a process of sharing the device identity information includes steps S211a to S211f.

S211a: The first shared device negotiates a communication handshake protocol type with the second shared device.

The first shared device sends communication protocols that it supports to the second shared device. For example, the communication protocols may be a secure communication protocol.

The second shared device selects a target protocol from the communication protocols supported by the first shared device.

For example, the target protocol may be a protocol in which both parties use an existing key exchange method (for example, Diffie-Hellman Key Exchange (Diffie-Hellman Key Exchange)) to establish a one-time session symmetric encryption key. Alternatively, the target protocol may be a protocol in which both parties perform communication using decentralized identifier communication (decentralized identifier communication, DIDComm). During communication using this protocol, both parties exchange public key certificates of each other. After successful verification of the public key certificates, the encrypting party may encrypt information to be transmitted using both public keys, while the decrypting party performs decryption using the corresponding local private key.

S211b: The first shared device sends a connection request to the second shared device. Correspondingly, the second shared device receives the connection request from the first shared device.

The connection request includes a handshake credential of the first shared device. The handshake credential is used to verify an identity of the first shared device.

In S211b, a secure channel may be established between the first shared device and the second shared device.

Through the established secure channel, the first shared device sends a connection request credential to the second shared device. The connection request credential is used by the second shared device to verify the identity of the first shared device.

S211c: The second shared device verifies the identity of the first shared device based on the handshake credential of the first shared device.

After verifying the identity of the first shared device, the second shared device may determine, based on the identity verification result of the first shared device, whether to initiate data synchronization.

The identity of the first shared device may be verified locally on the second shared device, or via a third-party verification service. For example, if the first shared device and the second shared device belong to different operators, verification needs to be performed by using a verification service of the operator to which the first shared device belongs.

S211d: The second shared device sends a connection response to the first shared device. Correspondingly, the first shared device receives the connection response from the second shared device.

The connection response includes a handshake credential of the second shared device. The handshake credential may be used to verify an identity of the second shared device.

S211e: The first shared device negotiates a data synchronization protocol with the second shared device.

In a possible implementation, S211e may include: The first shared device sends supported data synchronization protocols to the second shared device, and the second shared device selects a target protocol from the data synchronization protocols supported by the first device, and returns a selection result to the first shared device. The data synchronization protocol supported by the first device may use a distributed database synchronization manner or a decentralized synchronization manner based on a distributed ledger database, or the like.

In a possible implementation, the first shared device verifies the identity of the second shared device based on the handshake credential of the second shared device. For the implementation principle, refer to S211c. After successful verification, S211e is performed.

S211f: The first shared device sends the device identity information to the second shared device. Correspondingly, the second shared device receives the device identity information from the first shared device.

The first shared device preprocesses the device identity information based on the data synchronization protocol returned by the second shared device, and sends the preprocessed device identity information to the second shared device. The preprocessing of the device identity information may include: packaging (compressing) the device identity information data as a whole, or partitioning the device identity information into blocks.

In the method shown in FIG. 3, S211a to S211e are optional steps, and may be performed when the type of the first shared device is different from that of the second shared device, for example, when the second shared device is a device in a non-3GPP network.

It should be understood that identity credentials submitted by the first shared device and the second shared device may be of different credential types. A manner of verifying the identity of the first shared device may also be different from that of verifying the identity of the second shared device.

For ease of understanding of the method provided in FIG. 2, the following separately describes the communication method provided in FIG. 2 with reference to different scenarios.

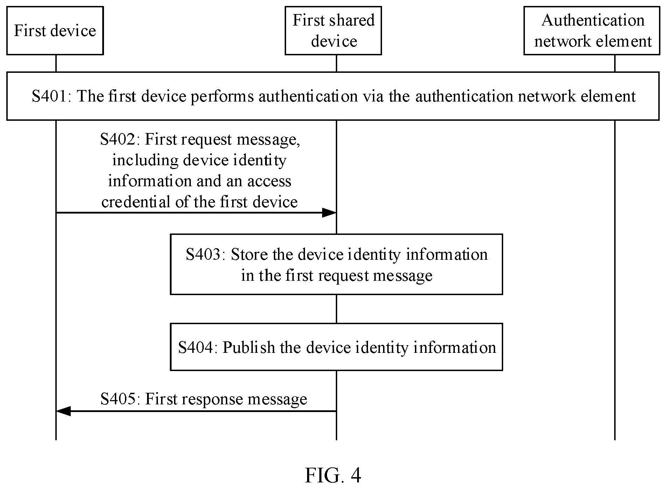

In some possible scenarios, the first device is a 3GPP terminal (referred to as a terminal), and the first device directly performs verification with the authentication network element, and directly sends the device identity information to the first shared device. In this case, for the method provided in FIG. 2, refer to the following communication method provided in FIG. 4. As shown in FIG. 4, the communication method includes the following steps.

S401: The first device performs authentication (authentication) via an authentication network element.

For example, the first device may send an authentication request to the authentication network element. The authentication request is used to request to authenticate an identity of the first device. The authentication request may include an identifier of the first device, for example, an SUCI. It may be understood that the SUCI is merely used as an example. In actual implementation, the identifier of the first device may alternatively be other information that may identify the first device.

After receiving the authentication request, the authentication network element performs authentication on the first device. For example, the authentication network element may invoke an authentication service interface (for example, a Nausf_auth service interface) to implement authentication on the first device. After the first device is successfully authenticated, the authentication network element may send an authentication response to the first device. The authentication response may carry an access credential (for example, a token) of the first device. For details, refer to Section 33.501 6.1 of the 3GPP technical specifications (technical specifications, TS).

For an implementation principle of the authentication network element, refer to related descriptions in the communication system provided in FIG. 1. Details are not described herein again.

S402: The first device sends a first request message to the first shared device. Correspondingly, the first shared device receives the first request message from the first device.

For the first request message, refer to related descriptions in S201.

Optionally, authentication information of the first device may include the access credential of the first device. The authentication information of the first device may be used to perform network access verification on the terminal, to prevent an unauthenticated terminal from accessing a network, thereby making communication more secure.

In a possible implementation, the first request message may be implemented by invoking a publish service interface (for example, a Publish() service interface). For example, the publish service interface may be a representational state transfer application service interface (representational state transfer application programming interface, RESTful API). This API complies with a uniform resource identifier (uniform resource identifier, URI) standard. An interface address of the API includes parameters of a host (host) name of the first shared device, a host identifier (id), and a publishing method (method), which indicate a storage method of the device identity information. The first device may access or invoke the API through the interface address. A parameter (that is, an input parameter) that needs to be provided when the API is invoked includes information (for example, oAuth2ClientCredential) used to authenticate the identity of the first device and the device identity information (for example, ProfileDataResource) that needs to be carried in the first request message. Response (response) information of the API includes a first response message. For example, when the identity information is successfully published, response information includes "OK"; or when the identity information fails to be published, the response information includes "Error message".

S403: The first shared device stores the device identity information in the first request message.

For an implementation principle of S403, refer to related descriptions of S203 in the method provided in FIG. 2. Details are not described herein again.

S404: The first shared device publishes the device identity information.

For a procedure of S404, refer to related descriptions of S204 in the method provided in FIG. 2. Details are not described herein again.

S405: The first shared device sends the first response message to the first device. Correspondingly, the first device receives the first response message from the first shared device.

For an implementation principle of the first response message, refer to related descriptions in the method provided in FIG. 2. Details are not described herein again.

For technical effects of the method provided in FIG. 4, refer to the technical effects of the method provided in FIG. 2. In addition, the first device performs authentication directly with the authentication network element. In this way, a storage procedure of the device identity information and an authentication procedure of the first device are separately performed, and an occasion for storing the device identity information is more flexible.

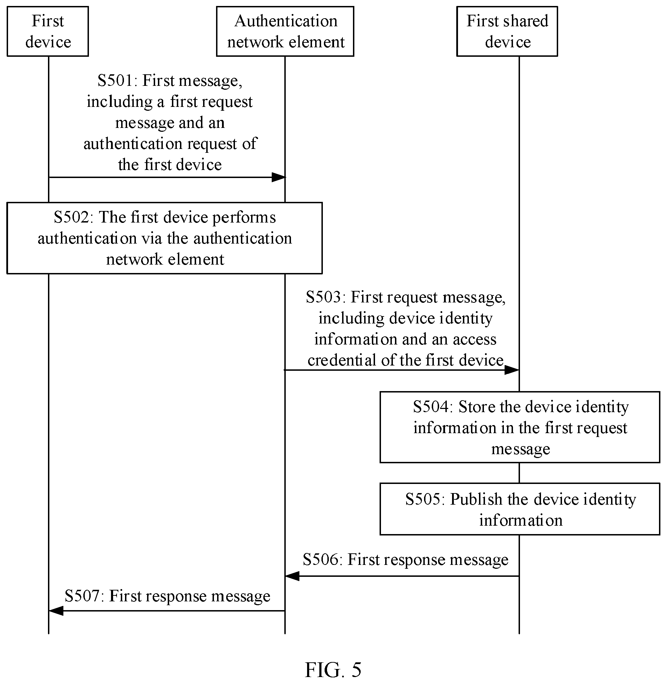

In some possible scenarios, the first device is a 3GPP terminal (referred to as a terminal), and the first device sends the device identity information to the first shared device via an authentication network element. In this case, for the method provided in FIG. 2, refer to the following communication method provided in FIG. 5. As shown in FIG. 5, the communication method includes the following steps.

S501: A first device sends a first message to an authentication network element. Correspondingly, the authentication network element receives the first message from the first device.

The first message includes a first request message and an authentication request of the first device.

For an implementation principle of the first request message, refer to related descriptions in the method provided in FIG. 4. The authentication request of the first device may be used to authenticate an identity of the first device, or may be used to authenticate the first device.

It should be understood that in S501, the first device may send the first message to the authentication network element through a non-access stratum (non-access stratum, NAS) message. Correspondingly, the authentication network element may receive the first message from the first device through the NAS message.

S502: The first device performs authentication via the authentication network element.

For an implementation principle of S502, refer to related descriptions of S401. A difference lies in that a step in which the first device sends the authentication request to the authentication network element is completed in S501.

S503: The authentication network element sends a first request message to the first shared device. Correspondingly, the first shared device receives the first request message from the authentication network element.

In a possible implementation, the first request message may be implemented by invoking a publish service interface (for example, a Publish() service interface). For example, the publish service interface may be a RESTful API. The API complies with a URI standard. An interface address of the API includes parameters of a host name of the first shared device, a host identifier, and a publishing method. The first device may access or invoke the API through the interface address. A parameter (that is, an input parameter) that needs to be provided when the API is invoked includes: information (for example, oAuth2ClientCredential) used to authenticate the identity of the first device, a publishing valid domain (for example, validDomain), and data (for example, ProfileDataResource) of the device identity information that needs to be carried in the first request message. Response information of the API includes a first response message.

S504: The first shared device stores the device identity information in the first request message.

For an implementation principle of S504, refer to related descriptions of S203 in the method provided in FIG. 2. Details are not described herein again.

S505: The first shared device publishes the device identity information.

In this embodiment of this application, the first shared device may publish the device identity information after receiving the first request message.

For an implementation principle of S505, refer to related descriptions of S204 in the method provided in FIG. 2. Details are not described herein again.

S506: The first shared device sends the first response message to the authentication network element. Correspondingly, the authentication network element receives the first response message from the first shared device.

For an implementation principle of the first response message, refer to related descriptions of S205 in the method provided in FIG. 2. Details are not described herein again.

S507: The authentication network element sends the first response message to the first device. Correspondingly, the first device receives the first response message from the authentication network element.

For technical effects of the method provided in FIG. 5, refer to the technical effects of the method provided in FIG. 2. In addition, the authentication network element sends the first request message, and includes the first request message and the authentication request of the first device in a same message. This can reduce a signaling interaction procedure, reduce resource overheads, improve communication efficiency, and reduce overheads of the terminal.

In this case, in FIG. 5, S501 to S503, that is, the first device sends the first request message to the first shared device via the authentication network element. The first shared device receives the first request message from the first device via the authentication network element. In other words, in the method provided in FIG. 2, that the first device sends the first request message to the first shared device may include: The first device sends the first request message to the first shared device via the authentication network element. In the method provided in FIG. 2, that the first shared device receives the first request message from the first device may include: The first shared device receives the first request message from the first device via the authentication network element.

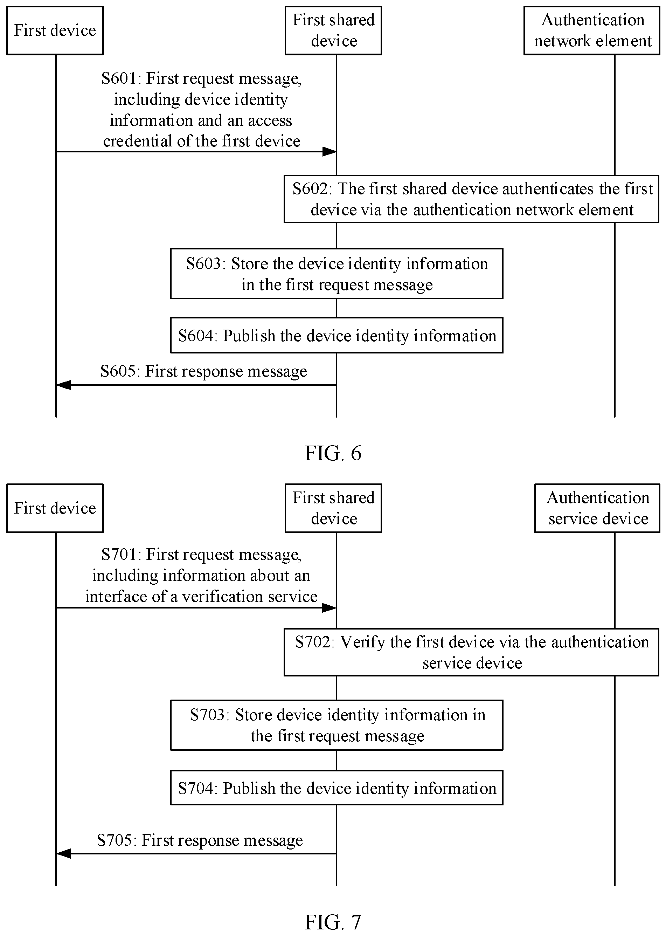

In some possible scenarios, the first device is a 3GPP terminal (referred to as a terminal), and the first device directly sends the device identity information to the first shared device. The first shared device implements authentication on the first device via the authentication network element. In this case, for the method provided in FIG. 2, refer to the following communication method provided in FIG. 6. As shown in FIG. 6, the communication method includes the following steps.

S601: A first device sends a first request message to a first shared device. Correspondingly, the first shared device receives the first request message from the first device.

For an implementation principle of the first request message, refer to related descriptions in S401.

S602: The first shared device authenticates the first device via the authentication network element.

For an implementation principle of S602, refer to related descriptions in the case 2. Details are not described herein again.

S603: The first shared device stores the device identity information in the first request message.

Optionally, S603 may include: When the first device is successfully authenticated, the first shared device stores the device identity information in the first request message.

For an implementation principle of storing the device identity information in the first request message by the first shared device, refer to related descriptions of S203. Details are not described herein again.

S604: The first shared device publishes the device identity information in the first request message.

Optionally, S604 may include: When the first device is successfully authenticated, the first shared device publishes the device identity information in the first request message.

For an implementation principle of publishing the device identity information in the first request message by the first shared device, refer to related descriptions of S204. Details are not described herein again.

S605: The first shared device sends a first response message to the first device. Correspondingly, the first device receives the first response message from the first shared device.

For an implementation principle of S605, refer to related descriptions of S405 in FIG. 4. Details are not described herein again.

For technical effects of the method provided in FIG. 6, refer to the technical effects of the method provided in FIG. 2. In addition, after receiving the first request message, the first shared device authenticates the first device via the authentication network element, so that an amount of data exchanged between the first device and the first shared device can be reduced, thereby reducing resource overheads and reducing power consumption of the terminal.

In some possible scenarios, the first device is a non-3GPP terminal (referred to as a terminal), and the first device directly sends the device identity information to the first shared device. In addition, the first shared device verifies the first device via an authentication service device. In this case, for the method provided in FIG. 2, refer to the following communication method provided in FIG. 7. As shown in FIG. 7, the communication method includes the following steps.

S701: A first device sends a first request message to a first shared device. Correspondingly, the first shared device receives the first request message from the first device.

The first request message further indicates information about an interface of a verification service. The verification service is used to verify a non-3GPP first device. Based on interface information of the verification service, the first device may access an authentication service device.

In addition, for an implementation principle of the first request message, refer to related descriptions in S201.

S702: The first shared device verifies the first device via the authentication service device.

The authentication service device may be a function node controlled by a third party, and is configured to provide, based on identity information proprietary to the third party, identity confirmation for the first device authorized by the third party, and confirm legitimacy, validity, and the like of the first device.

For an implementation principle of S702, refer to related descriptions in S209. A difference lies in that the fourth device is the authentication service device. Details are not described herein again.

S703: The first shared device stores the device identity information in the first request message.

Optionally, in S703, when the first device is successfully verified, the first shared device stores the device identity information in the first request message.

For an implementation principle of storing the device identity information in the first request message by the first shared device, refer to related descriptions of S203. Details are not described herein again.

S704: When the first device is successfully verified, the first shared device publishes the device identity information in the first request message.

Optionally, S704 may include: When the first device is successfully verified, the first shared device publishes the device identity information in the first request message.

For an implementation principle of publishing the device identity information in the first request message by the first shared device, refer to related descriptions of S204. Details are not described herein again.

S705: The first shared device sends a first response message to the first device. Correspondingly, the first device receives the first response message from the first shared device.

For an implementation principle of S705, refer to related descriptions of S405 in FIG. 4. Details are not described herein again.

For technical effects of the method provided in FIG. 7, refer to the technical effects of the method provided in FIG. 2. Details are not described herein again.

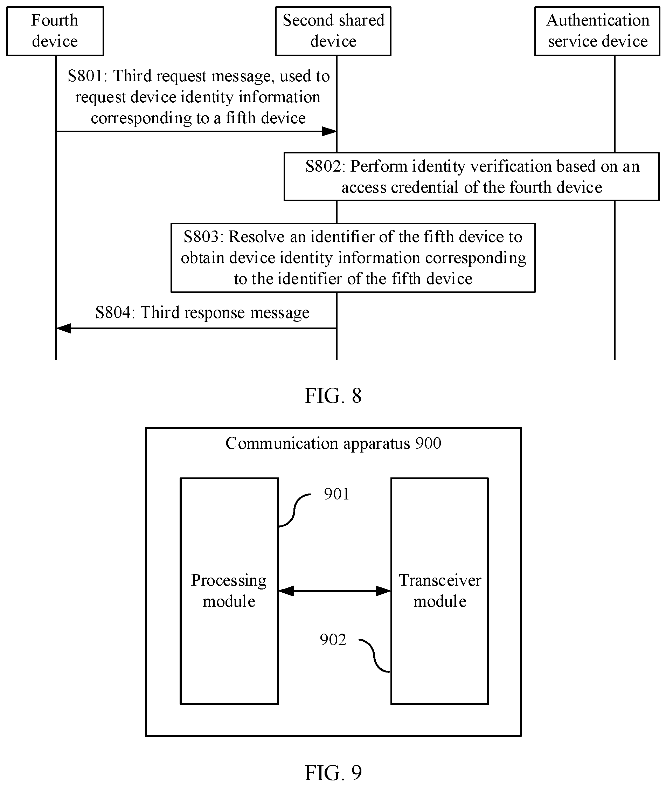

In some possible embodiments, a device may obtain device identity information of another device from a shared device. Details are shown in FIG. 8.

S801: A fourth device sends a third request message to a second shared device. Correspondingly, the second shared device receives the third request message from the fourth device.

The third request message is used to request device identity information corresponding to a fifth device. For an implementation principle of a third request, refer to related descriptions in the method provided in FIG. 2. Details are not described herein again.

The fourth device may be a device corresponding to an individual, an organization, or an institution, for example, the first-type device or the second-type device in the communication system provided in FIG. 1. In some possible implementation solutions, a device type of the fourth device may be a 3GPP device. In some possible implementations, the device type of the fourth device may be a non-3GPP device.

In the method provided in FIG. 8, the second shared device is a device having a data storage function, and the second shared device may exchange information with another device. The second shared device may be the first-type shared device. In this case, in a possible implementation solution, the second shared device may alternatively be the first shared device in the method provided in FIG. 2. Alternatively, the second shared device may be the second-type shared device. The fourth device may be a device in a 3GPP network or a device in a non-3GPP network. The second shared device prestores at least one piece of device identity information. Each piece of device identity information corresponds to one identifier. For an implementation principle of the device identity information, refer to related descriptions in FIG. 2. Details are not described herein again.

The following describes the second shared device with reference to different cases.

In a case 3, the second shared device may be a device in the 3GPP network. For example, the second shared device may be a network element in a core network. The network element of the core network may alternatively be a node in a blockchain. In this case, for an implementation principle of the second shared device, refer to the foregoing first shared device.

In a case 4, the second shared device may be a device in the non-3GPP network. For example, for implementation of the second shared device, refer to the first shared device. A difference lies in that ownership of the second shared device is different from ownership of the first shared device, or a controller of the second shared device is different from a controller of the first shared device. For another example, the second shared device may be a device corresponding to a distributed node in a distributed storage system, a device corresponding to a blockchain node in a blockchain system, or another device having a storage function.

Optionally, the third request message may further include information indicating a device type of the fourth device.

Optionally, the third request message may include information indicating an identifier of the fifth device.

S802: The second shared device performs identity verification based on an access credential of the fourth device.

If the fourth device is a 3GPP device, that the second shared device performs identity verification based on the access credential of the fourth device includes: The second shared device performs identity verification with an authentication network element based on the access credential of the fourth device. For a principle of performing, by the second shared device, identity verification with the authentication network element based on the access credential of the fourth device, refer to related descriptions of S602.

If the fourth device is a non-3GPP device, that the second shared device performs identity verification based on the access credential of the fourth device includes: The second shared device performs identity verification with an authentication service device based on the access credential of the fourth device. For a principle of performing, by the second shared device, identity verification with the authentication service device based on the access credential of the fourth device, refer to related descriptions of S702. Details are not described herein again.

In this case, the third request message may further include information indicating the access credential of the fourth device. The access credential of the fourth device is used to verify an identity of the fourth device. If the fourth device is a 3GPP device, the access credential of the fourth device may be information used for authentication in the 3GPP network, for example, a username, a user password, or ID information registered by the fourth device. If the fourth device is a non-3GPP device, the access credential of the fourth device may be a VC corresponding to the fourth device.

S803: The second shared device resolves the identifier of the fifth device to obtain device identity information corresponding to the identifier of the fifth device.

Optionally, that the second shared device resolves the identifier of the fifth device to obtain the device identity information corresponding to the identifier of the fifth device may include: When the identity of the fourth device is successfully verified, the second shared device resolves the identifier of the fifth device to obtain the device identity information corresponding to the identifier of the fifth device.

In a possible implementation, the third request message may be implemented by invoking a resolve service interface, for example, a "Resolve() service interface". For example, the resolve service interface may be represented as a RESTful API. The API complies with a URI standard. An interface address of the API includes a host name of the second shared device. The first device may access or invoke the API through the interface address. A parameter (that is, an input parameter) that needs to be provided when the API is invoked includes access verification information (for example, an access credential) and the identifier of the fifth device. Response information of the API includes a third response message.

S804: The second shared device sends the third response message to the fourth device. Correspondingly, the fourth device receives the third response (Response) message from the second shared device.

The third response message includes the device identity information corresponding to the identifier of the fifth device.

Optionally, the third response message may further include information indicating that the fourth device successfully requests the device identity information. For example, the third response message may indicate that the first shared device successfully stores the device identity information. For another example, the third response message may indicate that the first shared device fails to store the device identity information.

Based on the method provided in FIG. 8, the fourth device may request, from the second shared device, attribute information corresponding to the identifier of the fifth device, to obtain the device identity information.

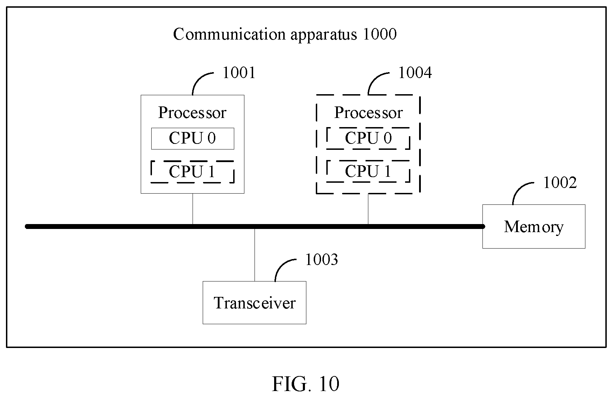

The foregoing describes in detail, with reference to FIG. 2 to FIG. 8, the communication methods provided in embodiments of this application. The following describes in detail, with reference to FIG. 9 and FIG. 10, communication apparatuses configured to perform the communication methods provided in embodiments of this application.

For example, FIG. 9 is a diagram 1 of a structure of a communication apparatus according to an embodiment of this application. As shown in FIG. 9, the communication apparatus 900 includes a processing module 901 and a transceiver module 902. For ease of description, FIG. 9 shows only main components of the communication apparatus 900.

In some embodiments, the communication apparatus 900 is applicable to the communication system shown in FIG. 1, and performs a function of the first device in the communication methods shown in FIG. 2, and FIG. 4 to FIG. 7.

The processing module 901 is configured to obtain a first request message. The first request message is used to store device identity information. The device identity information includes a device type of the communication apparatus 900 and/or a device type of a second device. The transceiver module 902 is configured to send the first request message to a first shared device. The first shared device is a network element in a communication network.

In a possible implementation solution, the device type may include a 3rd generation partnership project 3GPP terminal, a network element of the operator, or a non-3GPP terminal.

In a possible implementation solution, the communication apparatus 900 is a 3GPP terminal, and the first request message may further indicate authentication information of the communication apparatus 900. The authentication information of the communication apparatus 900 may be used to perform network access verification on the terminal, to prevent an unverified terminal from accessing a network, thereby making communication more secure.

In a possible implementation solution, the authentication information of the communication apparatus 900 may include an access credential of the communication apparatus 900.

In a possible implementation solution, the transceiver module 902 is further configured to send the first request message to the first shared device via an authentication network element.

In a possible implementation solution, the communication apparatus 900 is a non-3GPP terminal, and the first request message further indicates information about an interface of a verification service. The verification service is used to verify a non-3GPP terminal.

In a possible implementation solution, if the device identity information includes the device type of the communication apparatus 900, the device identity information further includes one or more of the following: a first identifier of the communication apparatus 900, a controller of a subject corresponding to the communication apparatus 900, information for verifying ownership of the first identifier, a subject type corresponding to the communication apparatus 900, a network domain identifier corresponding to the first identifier, a verifiable credential corresponding to the first identifier, a service or a service interface supported by the communication apparatus 900, and an encryption method corresponding to the communication apparatus 900.

In a possible implementation solution, if the device identity information includes the device type of the second device, the device identity information may further include one or more of the following: a second identifier of the second device, a device corresponding to the second identifier, information for verifying ownership of the second identifier, a subject type corresponding to the second device, a network domain identifier corresponding to the second identifier, a verifiable credential corresponding to the second identifier, a service or an interaction interface supported by the second device, and an encryption method corresponding to the second device.

In a possible implementation solution, the first request message is further used to publish the device identity information.

In a possible implementation solution, the transceiver module 902 is further configured to receive a first response message from the first shared device. The first response message indicates whether the first shared device has successfully stored the device identity information.

In a possible implementation solution, the transceiver module 902 is further configured to send a second request message to a second shared device. The second request message is used to request device identity information corresponding to a third device. The communication apparatus 900 receives a second response message from the second shared device. The second response message indicates the device identity information corresponding to the third device.

Optionally, the transceiver module 902 may include a receiving module and a sending module (not shown in FIG. 9). The transceiver module 902 is configured to implement a sending function and a receiving function of the communication apparatus 900.

Optionally, the communication apparatus 900 may further include a storage module (not shown in FIG. 9). The storage module stores a program or instructions. When the processing module 901 executes the program or the instructions, the communication apparatus 900 is enabled to perform the function of the first device in the communication method shown in any one of FIG. 2, and FIG. 4 to FIG. 7.

It should be understood that the processing module 901 in the communication apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the communication apparatus 900 may be a terminal device, may be a chip (system) or another part or component that may be disposed in the terminal device, or may be an apparatus that includes the terminal device. This is not limited in this application.

In addition, for technical effects of the communication apparatus 900, refer to the technical effects of the communication methods shown in any one of FIG. 2, and FIG. 4 to FIG. 7. Details are not described herein again.

In some other embodiments, the communication apparatus 900 may be used in the communication system shown in FIG. 1, and perform a function of the first shared device in the communication methods shown in FIG. 2, and FIG. 4 to FIG. 7.

The transceiver module 902 is configured to receive a first request message from the first device. The first request message is used to store device identity information. The device identity information includes a device type of the first device and/or a device type of a second device. The processing module 901 is configured to store the device identity information in the first request message.

In a possible implementation solution, the device type may include a 3rd generation partnership project 3GPP terminal, a network element of the operator, or a non-3GPP terminal.

In a possible implementation solution, the first device is a 3GPP terminal, and the first request message further indicates authentication information of the first device.

In a possible implementation solution, the authentication information of the first device includes an access credential of the first device.

In a possible implementation solution, the transceiver module 902 is further configured to receive the first request message from the first device via an authentication network element.

In a possible implementation solution, the first device is a 3GPP terminal, and the processing module 901 is further configured to verify the first device via the authentication network element. The processing module 901 is further configured to store the device identity information in the first request message when the first device is successfully verified.

In a possible implementation solution, the first device is a non-3GPP terminal, and the first request message further indicates information about an interface of a verification service. The verification service is used to verify a non-3GPP terminal.

In a possible implementation solution, if the device identity information includes the device type of the first device, the device identity information includes one or more of the following: a first identifier of the first device, a controller of a subject corresponding to the first device, information for verifying ownership of the first identifier, a subject corresponding to the first device, a network domain identifier corresponding to the first identifier, a verifiable credential corresponding to the first identifier, a service or a service interface supported by the first device, and an encryption method corresponding to the first device.

In a possible implementation solution, if the device identity information includes the device type of the second device, the device identity information includes one or more of the following: a second identifier of the second device, a device corresponding to the second identifier, information for verifying ownership of the second identifier, a subject corresponding to the second device, a network domain identifier corresponding to the second identifier, a verifiable credential corresponding to the second identifier, a service or an interaction interface supported by the second device, and an encryption method corresponding to the second device.

In a possible implementation solution, the first request message is further used to publish the device identity information, and the processing module 901 is further configured to publish the device identity information.

In a possible implementation solution, the transceiver module 902 is further configured to send a first response message to the first device.

In a possible implementation solution, the transceiver module 902 is further configured to send the device identity information to the second shared device.

In a possible implementation solution, the transceiver module 902 is further configured to receive a third request message from a fourth device. The third request message is used to request device identity information corresponding to a fifth device. The transceiver module 902 is further configured to send a third response message. The third response message indicates the device identity information corresponding to the fifth device.

In a possible implementation solution, the processing module 901 is further configured to verify the fourth device via an authentication service device.

Optionally, the transceiver module 902 may include a receiving module and a sending module (not shown in FIG. 9). The transceiver module 902 is configured to implement a sending function and a receiving function of the communication apparatus 900.

Optionally, the communication apparatus 900 may further include a storage module (not shown in FIG. 9). The storage module stores a program or instructions. When the processing module 901 executes the program or the instructions, the communication apparatus 900 is enabled to perform the function of the first device in the communication method shown in any one of FIG. 2, and FIG. 4 to FIG. 7.

It should be understood that the processing module 901 in the communication apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the communication apparatus 900 may be a network device, may be a chip (system) or another part or component that may be disposed in the network device, or may be an apparatus including the network device. This is not limited in this application.

In addition, for technical effects of the communication apparatus 900, refer to the technical effects of the communication methods shown in any one of FIG. 2, and FIG. 4 to FIG. 7. Details are not described herein again.

In some other embodiments, the communication apparatus 900 may be used in the communication system shown in FIG. 1, and perform a function of the first device in the communication methods shown in FIG. 2, and FIG. 4 to FIG. 7.

The processing module 901 is configured to send a third request message to the second shared device by using the transceiver module 902. The third request message is used to request device identity information corresponding to an identifier of the fifth device. The processing module 901 is further configured to receive a third response message from the second shared device by using the transceiver module 902. The third response message includes the device identity information corresponding to the identifier of the fifth device.

In a possible implementation solution, the third request message may further include information indicating an access credential of the communication apparatus 900. The access credential of the communication apparatus 900 is used to verify an identity of the communication apparatus 900.

In a possible implementation solution, the third request message may further include information indicating a device type of the communication apparatus 900.

Optionally, the transceiver module 902 may include a receiving module and a sending module (not shown in FIG. 9). The transceiver module 902 is configured to implement a sending function and a receiving function of the communication apparatus 900.

Optionally, the communication apparatus 900 may further include a storage module (not shown in FIG. 9). The storage module stores a program or instructions. When the processing module 901 executes the program or the instructions, the communication apparatus 900 is enabled to perform a function of the first device in the communication method shown in FIG. 8.

It should be understood that the processing module 901 in the communication apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the communication apparatus 900 may be a terminal device, may be a chip (system) or another part or component that may be disposed in the terminal device, or may be an apparatus that includes the terminal device. This is not limited in this application.

In addition, for technical effects of the communication apparatus 900, refer to the technical effects of the communication method shown in FIG. 8. Details are not described herein again.

In some other embodiments, the communication apparatus 900 may be used in the communication system shown in FIG. 1, and perform a function of the second shared device in the communication method shown in FIG. 8.

The processing module 901 is configured to receive a third request message from a fourth device by using the transceiver module 902. The third request message is used to request device identity information corresponding to an identifier of a fifth device. The processing module 901 is further configured to send a third response message to the fourth device by using the transceiver module 902. The third response message includes the device identity information corresponding to the identifier of the fifth device.

In a possible implementation solution, the processing module 901 is further configured to resolve the identifier of the fifth device to obtain the device identity information corresponding to the identifier of the fifth device.

In a possible implementation solution, the third request message indicates information about an access credential of the fourth device. The access credential of the fourth device is used to verify the fourth device. The processing module 901 is further configured to perform identity verification with the second shared device based on the access credential of the fourth device.

In a possible implementation solution, the third request message may further include information indicating a device type of the fourth device.

Optionally, the transceiver module 902 may include a receiving module and a sending module (not shown in FIG. 9). The transceiver module 902 is configured to implement a sending function and a receiving function of the communication apparatus 900.

Optionally, the communication apparatus 900 may further include a storage module (not shown in FIG. 9). The storage module stores a program or instructions. When the processing module 901 executes the program or the instructions, the communication apparatus 900 is enabled to perform a function of the second shared device in the communication method shown in FIG. 9.

It should be understood that the processing module 901 in the communication apparatus 900 may be implemented by a processor or a processor-related circuit component, and may be a processor or a processing unit. The transceiver module 902 may be implemented by a transceiver or a transceiver-related circuit component, and may be a transceiver or a transceiver unit.

It should be noted that the communication apparatus 900 may be a network device, may be a chip (system) or another part or component that may be disposed in the network device, or may be an apparatus including the network device. This is not limited in this application.

In addition, for technical effects of the communication apparatus 900, refer to the technical effects of the communication method shown in FIG. 8. Details are not described herein again.

For example, FIG. 10 is a diagram 2 of a structure of a communication apparatus according to an embodiment of this application. The communication apparatus may be a terminal or a network device, or may be a chip (system) or another part or component that may be disposed in the terminal device or the network device. As shown in FIG. 10, the communication apparatus 1000 may include a processor 1001. Optionally, the communication apparatus 1000 may further include a memory 1002 and/or a transceiver 1003. The processor 1001 is coupled to the memory 1002 and the transceiver 1003, for example, may be connected through a communication bus.

The following describes components of the communication apparatus 1000 in detail with reference to FIG. 10.

The processor 1001 is a control center of the communication apparatus 1000, and may be one processor, or may be a collective term of a plurality of processing elements. For example, the processor 1001 is one or more central processing units (central processing unit, CPU), or may be an application-specific integrated circuit (application-specific integrated circuit, ASIC), or may be one or more integrated circuits configured to implement embodiments of this application, for example, one or more digital signal processors (digital signal processor, DSP) or one or more field programmable gate arrays (field programmable gate array, FPGA).

Optionally, the processor 1001 may run or execute a software program stored in the memory 1002 and invoke data stored in the memory 1002, to perform various functions of the communication apparatus 1000.

During specific implementation, in an embodiment, the processor 1001 may include one or more CPUs, for example, a CPU 0 and a CPU 1 shown in FIG. 10.

During specific implementation, in an embodiment, the communication apparatus 1000 may alternatively include a plurality of processors, for example, the processor 1001 and a processor 1004 shown in FIG. 10. Each of the processors may be a single-core processor (single-CPU), or may be a multi-core processor (multi-CPU). The processor herein may be one or more devices, circuits, and/or processing cores configured to process data (for example, computer program instructions).

The memory 1002 is configured to store the software program for executing the solutions in this application, and the processor 1001 controls execution. For a specific implementation, refer to the foregoing method embodiments. Details are not described herein again.

Optionally, the memory 1002 may be a read-only memory (read-only memory, ROM) or another type of static storage device that can store static information and instructions, a random access memory (random access memory, RAM) or another type of dynamic storage device that can store information and instructions, or may be an electrically erasable programmable read-only memory (electrically erasable programmable read-only memory, EEPROM), a compact disc read-only memory (compact disc read-only memory, CD-ROM) or other compact disc storage, optical disc storage (including a compressed optical disc, a laser disc, an optical disc, a digital versatile optical disc, a Blu-ray disc, and the like), a magnetic disk storage medium or another magnetic storage device, or any another medium that can be used to carry or store expected program code in the form of instructions or a data structure and that can be accessed by a computer, but not limited thereto. The memory 1002 may be integrated with the processor 1001, or may exist independently and is coupled to the processor 1001 through an interface circuit (not shown in FIG. 10) of the communication apparatus 1000. This is not specifically limited in this embodiment of this application.

The transceiver 1003 is configured to communicate with another communication apparatus. For example, the communication apparatus 1000 is a terminal device, and the transceiver 1003 may be configured to communicate with a network device or another terminal device. For another example, the communication apparatus 1000 is a network device, and the transceiver 1003 may be configured to communicate with a terminal device or another network device.

Optionally, the transceiver 1003 may include a receiver and a transmitter (not separately shown in FIG. 10). The receiver is configured to implement a receiving function, and the transmitter is configured to implement a sending function.

Optionally, the transceiver 1003 may be integrated with the processor 1001, or may exist independently and is coupled to the processor 1001 through an interface circuit (not shown in FIG. 10) of the communication apparatus 1000. This is not specifically limited in this embodiment of this application.

It should be noted that the structure of the communication apparatus 1000 shown in FIG. 10 does not constitute a limitation on the communication apparatus. An actual communication apparatus may include more or fewer components than those shown in the figure, or combine some components, or have different component arrangements.

In addition, for technical effects of the communication apparatus 1000, refer to the technical effects of the communication methods in the foregoing method embodiments. Details are not described herein again.

An embodiment of this application provides a communication system. The communication system includes the foregoing one or more terminal devices and one or more network devices.

It should be understood that, in embodiments of this application, the processor may be a CPU, or may be another general-purpose processor, a DSP, an ASIC, an FPGA or another programmable logic device, a discrete gate or transistor logic device, a discrete hardware component, or the like. The general-purpose processor may be a microprocessor, or the processor may be any conventional processor or the like.

It may be understood that the memory in embodiments of this application may be a volatile memory or a non-volatile memory, or may include a volatile memory and a non-volatile memory. The non-volatile memory may be a ROM, a programmable read-only memory (programmable ROM, PROM), an erasable programmable read-only memory (erasable PROM, EPROM), an EEPROM, or a flash memory. The volatile memory may be a RAM, and serves as an external cache. Through example but not limitative description, many forms of RAMs may be used, for example, a static random access memory (static RAM, SRAM), a dynamic random access memory (DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchronous link dynamic random access memory (synchlink DRAM, SLDRAM), and a direct rambus random access memory (direct rambus RAM, DR RAM).

All or some of the foregoing embodiments may be implemented using software, hardware (for example, circuit), firmware, or any combination thereof. When software is used for implementation, the foregoing embodiments may be implemented completely or partially in a form of a computer program product. The computer program product includes one or more computer instructions or computer programs. When the computer instructions or the computer programs are loaded and executed on the computer, the procedure or functions according to embodiments of this application are completely or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, infrared, radio, and microwave, or the like) manner. The computer-readable storage medium may be any usable medium accessible by a computer, or a data storage device, such as a server or a data center, integrating one or more usable media. The usable medium may be a magnetic medium (for example, a floppy disk, a hard disk, or a magnetic tape), an optical medium (for example, a DVD), or a semiconductor medium. The semiconductor medium may be a solid-state drive.

It should be understood that the term "and/or" in this specification describes only an association relationship between associated objects and represents that three relationships may exist. For example, A and/or B may represent the following three cases: Only A exists, both A and B exist, and only B exists. A and B may be singular or plural. In addition, the character "/" in this specification usually indicates an "or" relationship between the associated objects, but may also indicate an "and/or" relationship. For details, refer to the context for understanding.

In this application, "at least one" means one or more, and "a plurality of" means two or more. "At least one of the following" or a similar expression thereof indicates any combination of these items, including a single item or any combination of a plurality of items. For example, at least one of a, b, or c may indicate: a, b, c, a and b, a and c, b and c, or a, b, and c, where a, b, and c may be singular or plural.

It should be understood that sequence numbers of the foregoing processes do not mean execution sequences in various embodiments of this application. The execution sequences of the processes should be determined according to functions and internal logic of the processes, and should not be construed as any limitation on the implementation processes of embodiments of this application.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and implement constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In several embodiments provided in this application, it should be understood that the disclosed system, apparatus, and method may be implemented in another manner. For example, the described apparatus embodiment is merely an example. For example, division into the units is merely logical function division and may be other division in actual implementation. For example, a plurality of units or components may be combined or integrated into another system, or some features may be ignored or not performed. In addition, the mutual coupling or direct coupling or communication connection shown or discussed may be indirect coupling or communication connection through some interfaces, apparatuses, or units, and may be in electrical, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units are integrated into one unit.

When the functions are implemented in the form of a software functional unit and sold or used as an independent product, the functions may be stored in a computer-readable storage medium. Based on such an understanding, the technical solutions of this application essentially, or the part contributing to the prior art, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, such as a USB flash drive, a removable hard disk, a ROM, a RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application. Therefore, the protection scope of this application shall be subject to the protection scope of the claims.

## Claims

1. A communication method, applied to a first device, wherein the method comprises:
obtaining a first request message, wherein the first request message is used to store device identity information; and
sending the first request message to a first shared device, wherein the first shared device is a network element in a communication network.

2. The method according to claim 1, wherein the device identity information comprises a device type of the first device and/or a device type of a second device.

3. The method according to claim 2, wherein the device type comprises: a 3rd generation partnership project 3GPP terminal, a network element of an operator, or a non-3GPP terminal.

4. The method according to claim 3, wherein the first device is a 3GPP terminal, and the first request message further indicates authentication information of the first device.

5. The method according to claim 4, wherein the authentication information of the first device comprises an access credential of the first device.

6. The method according to claim 4 or 5, wherein sending the first request message to the first shared device comprises:
sending the first request message to the first shared device via an authentication network element.

7. The method according to claim 3, wherein the first device is a non-3GPP terminal, the first request message further indicates information about an interface of a verification service, and the verification service is used to verify the non-3GPP terminal.

8. The method according to any one of claims 1 to 7, wherein if the device identity information comprises the device type of the first device, the device identity information further comprises one or more of the following: a first identifier of the first device, a controller of a subject corresponding to the first device, information for verifying ownership of the first identifier, a subject type corresponding to the first device, a network domain identifier corresponding to the first identifier, a verifiable credential corresponding to the first identifier, a service or a service interface supported by the first device, and an encryption method corresponding to the first device.

9. The method according to any one of claims 1 to 8, wherein if the device identity information comprises the device type of the second device, the device identity information further comprises one or more of the following: a second identifier of the second device, a device corresponding to the second identifier, information for verifying ownership of the second identifier, a subject type corresponding to the second device, a network domain identifier corresponding to the second identifier, a verifiable credential corresponding to the second identifier, a service or an interaction interface supported by the second device, and an encryption method corresponding to the second device.

10. The method according to any one of claims 1 to 9, wherein the first request message is further used to publish the device identity information.

11. The method according to any one of claims 1 to 10, wherein the method further comprises:
receiving a first response message from the first shared device, wherein the first response message indicates whether the first shared device has successfully stored the device identity information.

12. The method according to any one of claims 1 to 11, wherein the method further comprises:
sending a second request message to a second shared device, wherein the second request message is used to request device identity information corresponding to a third device; and
receiving a second response message from the second shared device, wherein the second response message indicates the device identity information corresponding to the third device.

13. A communication method, applied to a first shared device, wherein the method further comprises:
receiving a first request message from a first device, wherein the first request message is used to store device identity information; and
storing the first request message.

14. The method according to claim 13, wherein the device identity information comprises a device type of the first device and/or a device type of a second device.

15. The method according to claim 14, wherein the device type comprises: a 3rd generation partnership project 3GPP terminal, a network element of an operator, or a non-3GPP terminal.

16. The method according to claim 15, wherein the first device is a 3GPP terminal, and the first request message further indicates authentication information of the first device.

17. The method according to claim 16, wherein the authentication information of the first device comprises an access credential of the first device.

18. The method according to claim 15 or 16, wherein receiving the first request message from the first device comprises:
receiving the first request message from the first device via an authentication network element.

19. The method according to claim 15, wherein the first device is a 3GPP terminal, and the method further comprises:
authenticating the first device via an authentication network element; and
storing the first request message comprises:
storing the first request message when the first device is successfully authenticated.

20. The method according to claim 15, wherein the first device is a non-3GPP terminal, the first request message further indicates information about an interface of a verification service, and the verification service is used to verify the non-3GPP terminal.

21. The method according to any one of claims 13 to 20, wherein if the device identity information comprises the device type of the first device, the device identity information comprises one or more of the following: a first identifier of the first device, a controller of a subject corresponding to the first device, information for verifying ownership of the first identifier, a subject corresponding to the first device, a network domain identifier corresponding to the first identifier, a verifiable credential corresponding to the first identifier, a service or a service interface supported by the first device, and an encryption method corresponding to the first device.

22. The method according to any one of claims 13 to 20, wherein if the device identity information comprises the device type of the second device, the device identity information comprises one or more of the following: a second identifier of the second device, a device corresponding to the second identifier, information for verifying ownership of the second identifier, a subject corresponding to the second device, a network domain identifier corresponding to the second identifier, a verifiable credential corresponding to the second identifier, a service or an interaction interface supported by the second device, and an encryption method corresponding to the second device.

23. The method according to any one of claims 13 to 22, wherein the first request message is further used to publish the device identity information, and the method further comprises:
publishing the device identity information.

24. The method according to any one of claims 13 to 23, wherein the method further comprises:
sending a first response message to the first device.

25. The method according to any one of claims 13 to 24, wherein the method further comprises:
sending the device identity information to a second shared device.

26. The method according to any one of claims 13 to 25, wherein the method further comprises:
receiving a third request message from a fourth device, wherein the third request message is used to request device identity information corresponding to a fifth device; and
sending a third response message to the fourth device, wherein the third response message indicates the device identity information corresponding to the fifth device.

27. The method according to claim 26, wherein the method further comprises:
verifying the fourth device via an authentication service device.

28. A communication method, applied to a fourth device, wherein the method comprises:
sending a third request message to a second shared device, wherein the third request message is used to request device identity information corresponding to an identifier of a fifth device; and
receiving a third response message from the second shared device, wherein the third response message comprises the device identity information corresponding to the identifier of the fifth device.

29. The method according to claim 28, wherein the third request message further comprises information indicating an access credential of the fourth device, and the access credential of the fourth device is used to verify an identity of the fourth device.

30. The method according to claim 28 or 29, wherein the third request message further comprises information indicating a device type of the fourth device.

31. A communication method, applied to a second shared device, wherein the method comprises:
receiving a third request message from a fourth device, wherein the third request message is used to request device identity information corresponding to an identifier of a fifth device; and
sending a third response message to the fourth device, wherein the third response message comprises the device identity information corresponding to the identifier of the fifth device.

32. The method according to claim 31, wherein the method further comprises:
resolving the identifier of the fifth device to obtain the device identity information corresponding to the identifier of the fifth device.

33. The method according to claim 31 or 32, wherein the method further comprises:
the third request message indicates information about an access credential of the fourth device, the access credential of the fourth device is used to verify the fourth device, and the method further comprises:
performing identity verification with the second shared device based on the access credential of the fourth device.

34. The method according to any one of claims 31 to 33, wherein the third request message further comprises information indicating a device type of the fourth device.

35. A communication apparatus, wherein the communication apparatus is configured to perform the communication method according to any one of claims 1 to 34.

36. A communication apparatus, comprising a processor, wherein the processor is configured to perform the communication method according to any one of claims 1 to 34.

37. A communication apparatus, comprising a processor, wherein the processor is coupled to a memory; and
the processor is configured to execute a computer program stored in the memory, to enable the communication apparatus to perform the communication method according to any one of claims 1 to 34.

38. A communication apparatus, comprising a processor and an interface circuit, wherein
the interface circuit is configured to receive code instructions and transmit the code instructions to the processor; and
the processor is configured to run the code instructions to perform the method according to any one of claims 1 to 34.

39. A communication apparatus, wherein the communication apparatus comprises a processor and a transceiver, the transceiver is configured to exchange information between the communication apparatus and another communication apparatus, and the processor executes program instructions to perform the communication method according to any one of claims 1 to 34.

40. A communication system, wherein the communication system comprises one or more terminal devices and one or more network devices, the one or more terminal devices are configured to perform the method according to any one of claims 1 to 12 or any one of claims 28 to 30, and the one or more network devices are configured to perform the method according to any one of claims 13 to 27 or any one of claims 31 to 34.

41. A computer-readable storage medium, wherein the computer-readable storage medium comprises a computer program or instructions, and when the computer program or the instructions are run on a computer, the computer is enabled to perform the communication method according to any one of claims 1 to 34.

42. A computer program product, wherein the computer program product comprises a computer program or instructions, and when the computer program or the instructions are run on a computer, the computer is enabled to perform the communication method according to any one of claims 1 to 34.
